# EUROPÄISCHE PATENTANMELDUNG

(11) **EP 0 928 851 A1**
(43) Veröffentlichungstag der Anmeldung: **14.07.1999**
(21) Anmeldenummer: 98124792.7
(22) Anmeldetag: 29.12.1998
(51) Int. Cl.: E04B 1/24

(54) **Bausatz zum Erstellen einer Halterung insbesondere für Rohrleitungen**

(30) Priorität: 08.01.1998 DE 29800185 U
(71) Anmelder: Kruljac, Emil, 50170 Kerpen (DE)
(72) Erfinder: Kruljac, Emil, 50170 Kerpen (DE)
(74) Vertreter: Schmitt, Hans, Dipl.-Ing.

(57) **Zusammenfassung**

Ein Bausatz zum Erstellen einer Halterung insbesondere für Rohrleitungen, weist wenigstens ein Grundelement (1) auf, das als T-Träger oder Doppel-T-Träger ausgebildet ist. Das Grundelement (1) hat zumindest an einem Stirnende eine quer zur Längserstreckung orientierte Anschlußplatte (3). Entlang seiner Längserstreckung weist das Grundelement (1) eine Vielzahl von Befestigungsstellen zum Anbringen von quer oder längs zum Grundelement (1) verlaufenden Zusatzelementen oder weiteren Grundelementen (1) auf.

## Beschreibung

Die Erfindung betrifft einen Bausatz zum Erstellen einer Halterung insbesondere für Rohrleitungen.

Man kennt bereits verschiedene Rohrhalterungssysteme, die zur Montage von Leitungsrohren dienen. So werden bei der Verlegung von Rohren mit einem kleineren Rohrdurchmesser üblicherweise Schienenkonstruktionen benutzt, an denen Rohrschellen zur Aufnahme von Leitungsrohren befestigt werden können. Hingegen müssen insbesondere solche Rohrhalterungen regelmäßig individuell geplant und konstruiert werden, welche im Anlagenbau die zur Aufnahme von Rohren mit einem größeren Rohrdurchmesser vorgesehenen Schellenböcke oder dergleichen Rohrhalterungen tragen sollen. Dabei besteht jedoch das Problem, daß die einzelnen Rohrhalterungen nicht exakt plan- und konstruierbar sind und die Rohrleitungen einschließlich der dafür vorgesehen Rohrhalterungen kurzfristig geändert und an den aktuellen Stand der Technik oder an einen neuen Produktionsablauf angepaßt werden müssen.

Es besteht daher insbesondere die Aufgabe, einen flexiblen und multifunktionalen Bausatz der eingangs erwähnten Art zu schaffen, an dem auch schwere Rohrleitungen schnell und mit geringem Aufwand befestigt werden können, ohne daß eine aufwendige Vorplanung erforderlich wäre.

Die erfindungsgemäße Lösung dieser Aufgabe besteht insbesondere darin, daß der Bausatz wenigstens ein Grundelement aufweist, das als T-Träger oder Doppel-T-Träger ausgebildet ist und zumindest an einem Stirnende eine quer zur Längserstreckung orientierte Anschlußplatte aufweist und daß das Grundelement entlang seiner Längserstreckung eine Vielzahl von Befestigungsstellen zum Anbringen von quer oder längs zum Grundelement verlaufenden Zusatzelementen oder weiteren Grundelementen aufweist.

Das Grundelement des erfindungsgemäßen Bausatzes weist an seinem einen Stirnende eine quer zur Längserstreckung orientierte Anschlußplatte auf, an der beispielsweise die erforderlichen Rohrschellen oder Schellenböcke befestigt werden können oder mit deren Hilfe das Grundelement an einem Stahlbauträger angeschraubt beziehungsweise an einer Betonwand oder am Boden verankert werden kann. Darüber hinaus sind am Grundelement entlang seiner Längserstreckung eine Vielzahl von Befestigungsstellen vorgesehen, die zum Anbringen von quer oder zum Grundelement verlaufenden Zusatzelementen oder weiteren Grundelementen dienen. Als solche Befestigungsstellen können beispielsweise Löcher oder dergleichen Befestigungsöffnungen am Grundelement oder auch Klemmstellen an dessen Seitenflanschen vorgesehen sein. Mittels dieser Grundelemente kann der erfindungsgemäße Bausatz mit geringem Aufwand in zumindest drei Achsen geklemmt, geschraubt oder gedübelt werden.

Der erfindungsgemäße Bausatz ist daher multifunktional und zeichnet sich durch eine hohe Flexibilität aus. Dabei kann der erfindungsgemäße Bausatz u.a. als Rohrunterstützung auch für schwere Rohre eingesetzt werden, ohne daß eine aufwendige Vorplanung erforderlich wäre. Vielmehr läßt sich der erfindungsgemäße Bausatz mit geringem Aufsatz auch direkt vor Ort an die individuellen Gegebenheiten und Erfordernisse anpassen.

Die hohe Flexibilität des erfindungsgemäßen Bausatzes wird begünstigt, wenn das Grundelement an seinem Steg wenigstens eine Längsreihe von Löchern als Befestigungsstellen aufweist und wenn der Seitensteg oder die Seitenstege des Grundelementes Anschlußstellen für Klemmelemente, vorzugsweise für Spannpratzen zum Verbinden mit Zusatzelementen oder weiteren Grundelementen bilden. Somit können an jedem Grundelement in beliebiger Höhe quer zur seiner Längserstreckung orientierte Zusatzelemente oder weitere Grundelemente angebracht werden.

Um das erfindungsgemäße Grundelement bedarfsweise in jeder beliebigen Drehstellung seiner Anschlußplatte befestigen zu können, ist es vorteilhaft, wenn die Anschlußplatte einen vorzugsweise quadratischen Umriß aufweist und in ihrem randnahen Bereich Durchtrittsöffnungen insbesondere zum Anbringen von Spannpratzen oder dergleichen Klemmelementen und/oder zum Befestigen von Rohrschellen, Schellenböcken oder dergleichen Rohrbefestigungen aufweist.

Zur Befestigung des Grundelementes kann auch auf einfache handelsübliche Spannpratzen zurückgegriffen werden, wenn die Anschlußplatte so dimensioniert ist, daß sie mit gegenüberliegenden, Durchtrittsöffnungen aufweisenden Randbereichen seitlich über den Rand eines plattenförmigen Anschlußbereiches eines Trägerelementes übersteht.

Eine Ausführungsform gemäß der Erfindung sieht vor, daß die Anschlußplatte zu der Längserstreckung des Grundelementes rechtwinklig oder schräg mit einem Winkel von vorzugsweise 45° oder 60° angeordnet ist. Ein solches, als Winkelstück ausgebildetes Grundelement läßt sich in einem Winkel von beispielsweise 45° oder 60° an der Quertraverse einer Stahlbaukonstruktion anbauen.

Ohne weiteres lassen sich auch zwei koaxial zueinander orientierte Grundelemente aneinander anfügen. Um in Längsrichtung gegebenenfalls auchlängereRohrhaltungskonstruktionenoderdergleichenbewerkstelligen zu können, ist es zweckmäßig, wenn als Zusatzelement ein im wesentlichen durch einen T-Träger oder einen Doppel-T-Träger gebildetes Verlängerungsteil mit einem dem Grundelement entsprechenden Querschnitt vorgesehen ist. Ein solcher Verlängerungsteil kann an dem der Anschlußplatte abgewandten Stirnende mit dem Grundelement verbunden werden, wobei an dem gegenüberliegenden Stirnende des Verlängerungsteiles gegebenenfalls auch weitere Grundbeziehungsweise Zusatzelemente oder Verlängerungsteile befestigbar sind.

Die multifunktionelle Verwendbarkeit des erfindungsgemäßen Bausatzes und dessen hohe Flexibilität wird begünstigt, wenn als Zusatzelement eine Stützkonsole mit einer im Querschnitt T-förmigen oder U-förmigen Stütze sowie an den Enden befindlichen Konsolenplatten vorgesehen sind und wenn die Konsolenplatten vorzugsweise etwa rechtwinklig zueinander angeordnet sind.

Die als Stützkonsolen ausgebildeten Zusatzelemente lassen sich besonders gut in die Bauteile des erfindungsgemäßen Bausatzes einordnen, wenn die Breite der Konsolenplatten und vorzugsweise auch die der Stütze gleich oder kleiner als die lichte Weite zwischen gegenüberstehenden Flanschen oder Schenkeln des Grundelementes oder eines Verlängerungsteiles ist.

Zweckmäßig ist es, wenn die Grundelemente und Verlängerungsteile mit unterschiedlicher Länge vorgesehen sind. Durch die entsprechende Auswahl verschiedener, unterschiedlich langer Grundelemente und Verlängerungsteile läßt sich der erfindungsgemäße Bausatz besonders einfach an die vorgegebene Raumsituation anpassen.

Die Grundelemente und Verlängerungsteile sind besonders einfach und leicht miteinander zu verbinden, wenn insbesondere zum Verbinden von Grundelementen und Verlängerungsteilen wenigstens ein im Querschnitt U-förmiges Verbindungsstück vorgesehen ist, dessen Außenquerschnitt etwa dem lichten Aufnahmequerschnitt eines Grundelementes oder eines Verlängerungsteiles seitlich neben dem Steg entspricht. Um an den einander gegenüberliegenden Stirnseiten eines Grundelementes jeweils eine Anschlußplatte zur Verfügung stellen zu können und um auch ein Verlängerungsteil bei Bedarf mit einer Anschlußplatte ausstatten zu können, ist es vorteilhaft, wenn insbesondere zum Anschließen am freien Ende eines Grundelementes oder an einem der Enden eines Verlängerungsteiles ein Stirnadapter mit einer Anschlußplatte sowie einem damit verbundenen Verbindungsstück mit Befestigungsstellen zum Anbringen an dem Grundelement oder einem Verlängerungsteil vorgesehen ist.

Ein Grundelement oder ein Verlängerungsteil läßt sich besonders fest und einfach mit einem anderen Grundelement, einem Verlängerungsteil oder anderen Zusatzelementen ausstatten, wenn der Stirnadapter zwei im Querschnitt U-förmige Verbindungsstücke aufweist, die auf der Anschlußplatte mit ihren Verbindungsstegen um die Stegdicke des Grundelementes beziehungsweise des Verlängerungsteiles etwa parallel beabstandet und vorzugsweise rechtwinklig zu der Anschlußplatte angeordnet sind.

Um ein Grundelement oder ein Verlängerungsteil etwa im rechten Winkel an einem Grundelement oder dergleichen befestigen zu können, werden vorzugsweise handelsübliche Spannpratzen verwendet. Möglich ist aber auch, daß ein winkelförmiger Formverbinder vorgesehen ist, der zumindest an einem seiner Schenkel Löcher zum Verbinden vorzugsweise mit dem Steg eines Grundelementes oder eines Verlängerungsteiles aufweist.

Weitere Merkmale gemäß der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig.1: eine Rohrhalterung, die baukastenartig im wesentlichen aus Grundelementen und Verlängerungsteilen zusammengebaut ist, in einer auseinander gezogenen perspektivischen Darstellung ihrer Bauteile,
- Fig. 2: zwei etwa rechtwinklig zueinander orientierte Grundelemente, von denen ein etwa horizontal angeordnetes Grundelement mit einer stirnseitigen Anschlußplatte an dem etwa vertikal orientierten Grundelement anliegt und über Spannpratzen mit diesem verbunden ist,
- Fig. 3: zwei etwa rechtwinklig zueinander angeordnete Grundelemente, die hier allerdings über einen winkelförmigen Formverbinder miteinander verbunden sind,
- Fig. 4: ein Grundelement in einer perspektivischen Darstellung,
- Fig. 5: ein Verlängerungsteil in einer perspektivischen Darstellung, wobei das Verlängerungsteil stirnseitig mit dem Grundelement aus Figur 4 verbunden werden kann, und
- Fig.6: eine vielteilige Rohrhalterung, die aus den Bauteilen des Bausatzes gemäß den Figuren 1 bis 5 zusammengestellt ist.

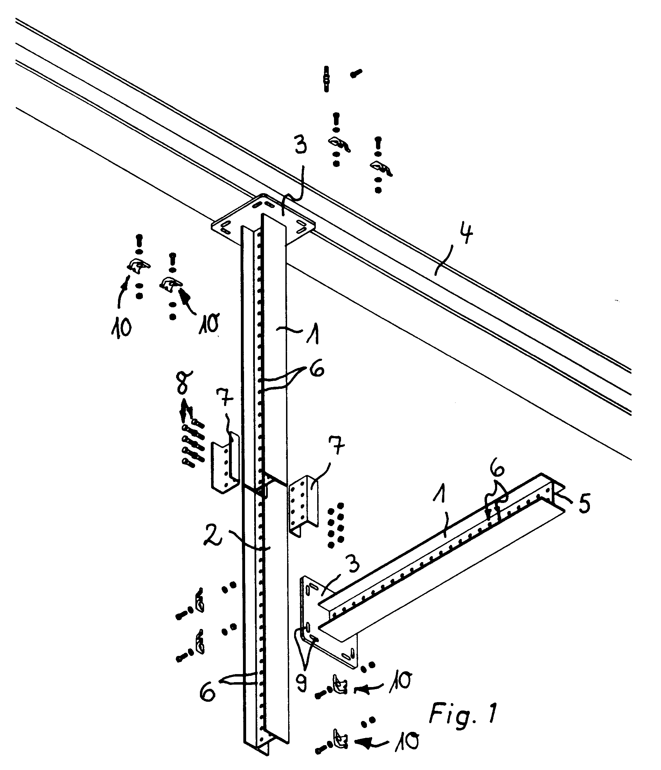

In den Figuren 1 bis 6 sind verschiedenen Bauteile eines Bausatzes dargestellt, der zum Erstellen einer Halterung insbesondere für Rohrleitungen vorgesehen ist.

Wie aus Figur 1 deutlich wird, weist der Bausatz Grundelemente 1 und Verlängerungsteile 2 auf, die als Doppel-T-Träger ausgebildet sind. Während das Verlängerungsteil 2 in Figur 1 freie Stirnenden hat, ist an einer der Stirnseiten jedes Grundelementes 1 eine quer zur Längserstreckung orientierte Anschlußplatte 3 vorgesehen. Diese Anschlußplatte 3 dient zum Befestigen an dem Seitenflansch eines anderen Grundelementes 1 oder Verlängerungsteiles 2 oder zum Verbinden mit einem gebäudeseitig vorhandenen Trägerelement, das hier ebenfalls als Doppel-T-Träger 4 ausgebildet ist.

Sowohl die Grundelemente 1 als auch das Verlängerungsteil 2 weisen an ihren Mittelstegen 5 zwei voneinander beabstandete Längsreihen von Löchern 6 auf, die als Befestigungsstellen dienen.

Zum stirnseitigen Verbinden der Grundelemente 1 mit einem koaxial angeordneten Verlängerungsteil 2 sind im Querschnitt U-förmige Verbindungsstücke 7 vorgesehen, deren Außenquerschnitt etwa dem übereinstimmenden lichten Aufnahmequerschnitt eines Grundelementes 1 oder eines Verlängerungsteiles 2 seitlich neben dem Mittelsteg 5 entspricht. Auch an den U-förmigen Verbindungsstücken 7 sind zwei voneinander beabstandete Längsreihen von Löchern 6 vorgesehen, die mit den Lochreihen an den Grundelementen 1 und Verlängerungsteilen 2 korrespondieren.

Die Verbindungsstücke 7 können somit beidseits in den Aufnahmequerschnitt der Doppel-T-Träger 1, 2 eingesetzt werden, um die Lochreihen an den Verbindungsstücken 7 einerseits sowie an den stirnseitig aneinander anliegenden Grundelement 1 und Verlängerungsteil 2 andererseits in Deckung zu bringen. Sind diese Löcher an den Bauteilen 1, 2, 7 in Deckung gebracht, können diese Bauteile 1, 2, 7 über eine entsprechende Anzahl von Schraubverbindungen 8 miteinander verbunden werden, wobei die Schraubverbindungen 8 die miteinander fluchtenden Löcher 6 von Grundelement 1 beziehungsweise Verlängerungsteil 2 einerseits und der beidseits anliegenden Verbindungsstücken 7 andererseits durchsetzen. Dabei stehen die U-förmigen Verbindungsstücke 7 mit einem Teilbereich in den Stirnendbereich des Verlängerungsteiles 2 vor, während der andere Teilbereich in den benachbarten und der Anschlußplatte 3 abgewandten Stirnendbereich des Grundelementes 1 ragt.

In Figur 1 ist dargestellt, daß die am Grundelement 1 vorgesehene Anschlußplatte 3 einen quadratischen Umriß aufweist und in ihrem randnahen Bereich insbesondere schlitzförmige Durchtrittsöffnungen 9 zum Anbringen von Spannpratzen oder dergleichen Klemmelementen und/oder zum Befestigen von Rohrschellen, Schellenböcken oder dergleichen Rohrbefestigungen aufweist. Dabei ist die Anschlußplatte 3 so dimensioniert, daß sie mit gegenüberliegenden, Durchtrittsöffnungen 9 aufweisenden Randbereichen seitlich über den Rand eines plattenförmigen Anschlußbereiches eines Trägerelementes übersteht.

Während in Figur 1 das vertikal orientierte Grundelement 1 mit der Anschlußplatte 3 an dem Seitenflansch eines gebäudeseitigen doppelseitigen T-Trägers anliegt, beaufschlagt das horizontale Grundelement 1 mit seiner Anschlußplatte 3 den Seitenflansch des Verlängerungsteiles 2. Dabei sind beide Anschlußplatten 3 an dem benachbarten Trägerelement über jeweils vier handelsübliche Spannpratzen 10 verbunden, die mittels einer Schraubverbindung an den in den Eckbereichen der Anschlußplatten 3 vorgesehenen Durchtrittsöffnungen 9 befestigt sind und den Seitenflansch der Trägerelemente randseitig hintergreifen. Somit lassen sich die Bauteile 1, 2, 3 und 7 des Bausatzes form- und/oder kraftschlüssig miteinander verbinden.

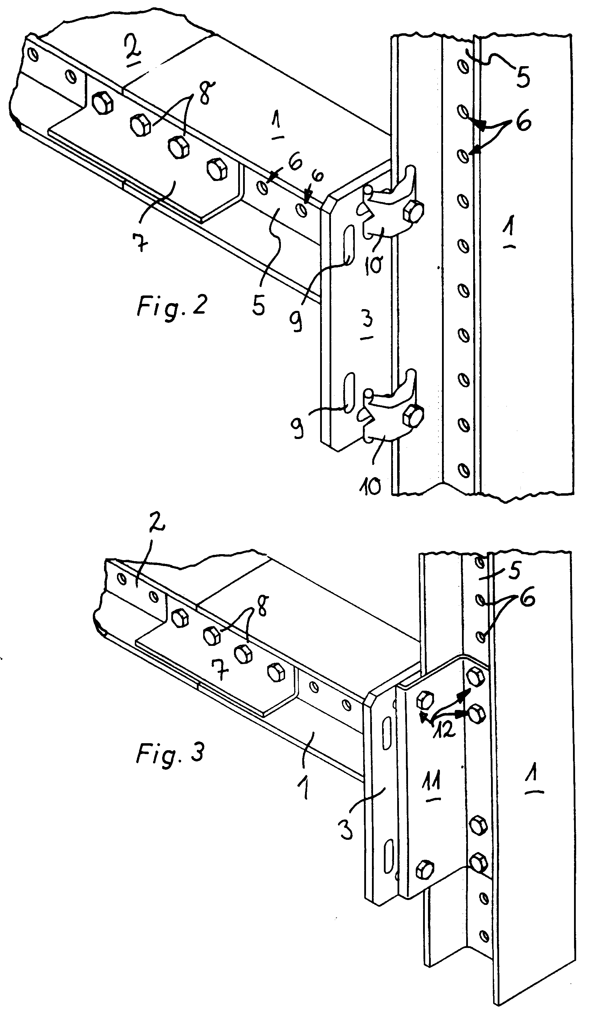

In Figur 2 ist die Befestigung eines Grundelementes 1 an dem Seitenflansch eines beispielsweise ebenfalls als Grundelement 1 ausgebildeten Doppel-T-Trägers näher dargestellt. Wie aus Figur 2 deutlich wird, sind an jeder der vier Längsseiten der Anschlußplatte 3 jeweils zwei randseitige parallele Durchstecköffnungen 9 vorgesehen. In diese Durchstecköffnungen 9 sind Spannschrauben einsetzbar, die jeweils eine mittig angeordnete Durchstecköffnung an der zugeordneten bügelförmigen Spannpratze 10 durchsetzen. Diese Spannpratzen 10 stützen sich mit dem einen Ende an der Ahschlußplatte 3 ab, während das gegenüberliegende andere Ende den Seitenflansch des Trägerelementes hintergreift.

Statt der Spannpratzen 10 ist aber auch der in Figur 3 dargestellte winkelförmige Formverbinder 11 einsetzbar, der an seinen beiden Schenkeln Löcher 12 aufweist. Dabei dienen die an dem einen Schenkel vorgesehenen Löcher 12 zum Verbinden mit dem Steg 5 eines Grundelementes 1 oder eines Verlängerungsteiles 2, während die an dem anderen Schenkel vorgesehenen Löcher 12 zum Befestigen an den Durchtrittsöffnungen 9 der Anschlußplatte 3 vorgesehen sind. Um ein Kippen der Anschlußplatte 3 zu verhindern, ist der parallel zur Anschlußplatte 3 angeordnete Schenkel geringfügig abgewinkelt, wie es etwa der Dicke des Seitenflansches des Doppel-T-Trägers entspricht.

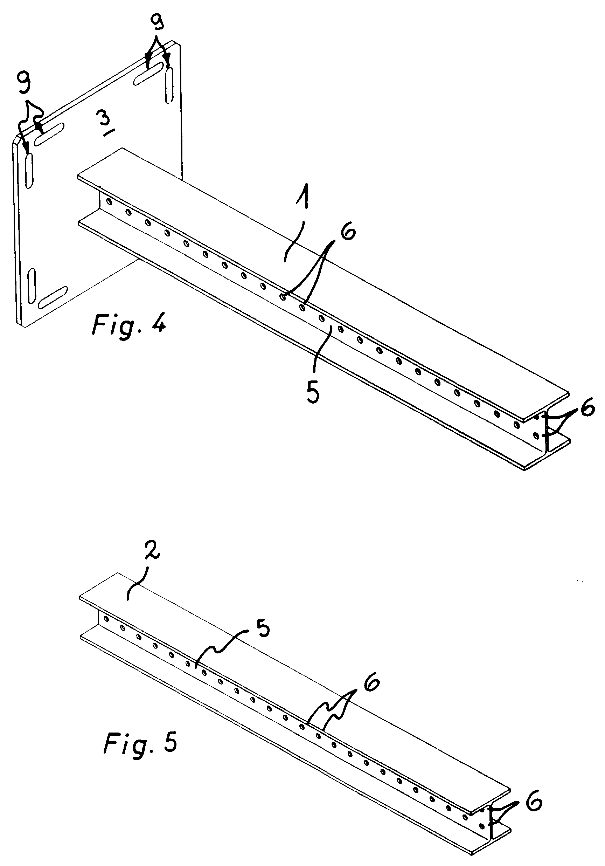

Während in Figur 4 das Grundelement 1 näher dargestellt ist, zeigt Figur 5 ein Verlängerungsteil 2. Um die aus den Bauteilen 1, 2 zusammengesetzteRohrhalterungindenbenötigtenAbmessungenaufbauen zu können, sind die Grundelemente 1 und Verlängerungsteile 2 in vorzugsweise drei unterschiedlichen Längen vorgesehen.

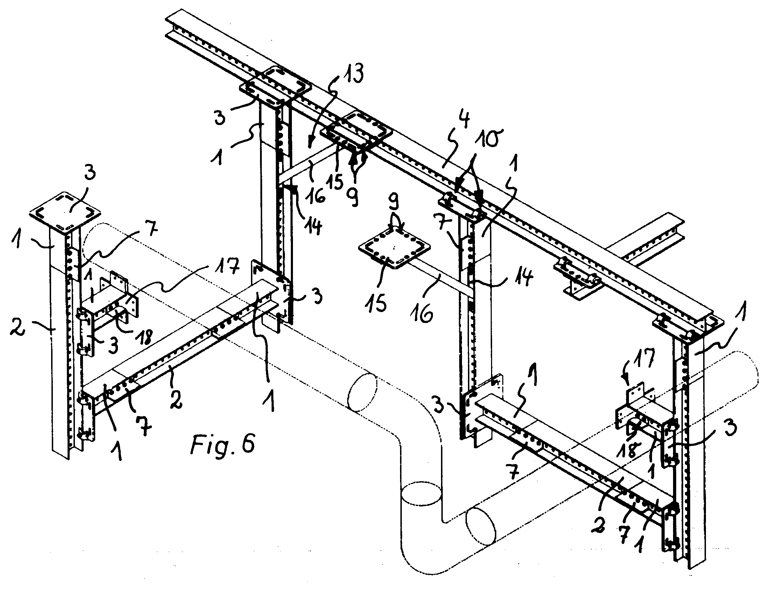

In Figur 6 ist eine Rohrhalterung dargestellt, die aus baukastenartig miteinanderkombinierbarenundverbindbarenBauteilenzusammengesetzt ist. Wie Figur 6 zeigt, weist der Bausatz Zusatzelemente auf, die als Stützkonsole 13 ausgebildet sind. An den Enden der Stützkonsolen 13 befinden sich etwa rechtwinklig zueinander angeordnete Konsolenplatten 14, 15, die über eine insbesondere T- oder U-förmige Stütze 16 verbunden sind. Während die als Anschlußplatte ausgebildete Konsolenplatte 15 an einem gebäudeseitigem T-Träger oder Doppel-T-Träger mittels Spannpratzen 10 befestigt werden kann, ist die gegenüberliegende andere Konsolenplatte 14 in den Aufnahmequerschnitt der Grundelemente 1 oder Verlängerungsteile 2 einsetzbar und kann dort mit den Lochreihen des Mittelsteges 5 verschraubt werden. Dazu ist die Breite der Konsolenplatte 14 gleich oder kleiner als die lichte Weite zwischen den gegenüberstehenden Seitenflanschen oder Schenkeln des Grundelementes 1 oder des Verlängerungsteiles 2.

In ähnlicher Weise ist es möglich, daß die Anschlußplatte 3 eines Grundelementes 1 schräg mit einem Winkel von vorzugsweise 45° oder 60° angeordnet ist.

Darüber hinaus weist der hier dargestellte Bausatz einen Stirnadapter 17 mit einer Anschlußplatte 3 auf, wobei an der Anschlußplatte 3 zum Anbringen des Stirnadapters 17 an dem Grundelement 1 oder dem Verlängerungsteil 2 zumindest ein Verbindungsstück mit Befestigungsstellen vorgesehen ist. Bei den in Figur 6 erkennbaren Stirnadaptern 17 sind zwei im Querschnitt U-förmige Verbindungsstücke 18 vorgesehen, die auf der Anschlußplatte 3 mit ihren Verbindungs- oder Mittelstegen um die Stegdicke des Grundelementes 1 beziehungsweise des Verlängerungsteiles 2 etwa parallel beabstandet zueinander angeordnet sind. Da die Verbindungsstücke 18 etwa rechtwinklig zur Anschlußplatte 3 angeordnet sind, ist auch die am Stirnadapter 17 vorgesehene Anschlußplatte 3 quer zur Längserstreckung der benachbarten Grundelemente 1 und Verlängerungsteile 2 angeordnet.

Die Grundelemente 1 werden an einem gebäudeseitigen Stahlbauträger 4, an einer Betonwand oder am Boden befestigt. Dabei können die Grundelemente 1 in drei Achsen geklemmt, geschraubt oder gedübelt werden. Die über die Verbindungsstücke 7 an den Grundelementen 1 befestigbaren Verlängerungsteile 2 dienen zur Verlängerung der Grundelemente 1 in Längsrichtung. An ein vorhandenes Grundelement 1 kann aber auch ein weiteres Grundelement 1 als Tragarm angeschraubt oder geklemmt werden. Am Grundelement 1 und insbesondere an dessen Anschlußplatte 3, an den Konsolenplatten 14, 15 oder am Stirnadapter 17 können die Rohrleitungen mit den dazugehörigen handelsüblichen Rohrhalterungen als Loslager, Führungslager oder Festpunkt aufgelegt werden. Solche Rohrhalterungen können beispielsweise aus einer Rohrschelle mit einander zugehörigem Schellenbock bestehen. Die Anschlußplatten 3 können zur direkten Aufnahme einer Schellenkonstruktion oder auch zur Queraufnahme eines der Verlängerungsteile 2 dienen. Dabei sind die Bauteile des hier dargestellten Bausatzes so bemessen, daß diese bis an Stahlbauprofilen HEB 1000 montiert werden können. Die als Zusatzelemente vorgesehenen Stützkonsolen 13 können zur Stabilität der Rohrhalterungskonstruktion sowohl an einem gebäudeseitigen Doppel-T-Träger angeschraubt, als auch im Beton-Wand- oder Bodenbereich mittels Dübel verankert werden.

Der hier dargestellte Bausatz ermöglicht es auch dem Erbauer oder Betreiber von industriellen Großanlagen die benötigten Schwerlastaufnahmen von Rohrleitungen schnell, flexibel, multifunktional, kostengünstig und ohne größere Vorplanungen zu erstellen. Dabei ist der Bausatz einfach und leicht handhabbar.

## Patentansprüche

1. Bausatz zum Erstellen einer Halterung insbesondere für Rohrleitungen, **dadurch gekennzeichnet,** daß der Bausatz wenigstens ein Grundelement (1) aufweist, das als T-Träger oder Doppel-T-Träger ausgebildet ist und zumindest an einem Stirnende eine quer zur Längserstreckung orientierte Anschlußplatte (3) aufweist und daß das Grundelement (1) entlang seiner Längserstreckung eine Vielzahl von Befestigungsstellen zum Anbringen von quer oder längs zum Grundelement (1) verlaufenden Zusatzelementen oder weiteren Grundelementen (1) aufweist.

2. Bausatz nach Anspruch 1, dadurch gekennzeichnet, daß das Grundelement (1) an seinem Steg (5) wenigstens eine Längsreihe von Löchern (6) als Befestigungsstellen aufweist und daß der oder die Seitenstege des Grundelementes (1) Anschlußstellen für Klemmelemente, vorzugsweise für Spannpratzen (10) zum Verbinden mit Zusatzelementen oder weiteren Grundelementen (1) bilden.

3. Bausatz nach Anspruch 1 oder 2, dadurch gekennzeichnet, daß die Anschlußplatte (3) einen vorzugsweise quadratischen Umriß aufweist und in ihrem randnahen Bereich Durchtrittsöffnungen (9), insbesondere zum Anbringen von Spannpratzen (10) oder dergleichen Klemmelementen und/oder zum Befestigen von Rohrschellen, Schellenböcken oder dergleichen Rohrbefestigungen, aufweist.

4. Bausatz nach einem der Ansprüche 1 bis 3, dadurch gekennzeichnet, daß die Anschlußplatte (3) so dimensioniert ist, daß sie mit gegenüberliegenden, Durchtrittsöffnungen (9) aufweisenden Randbereichen seitlich über den Rand eines plattenförmigen Anschlußbereiches eines Trägerelementes übersteht.

5. Bausatz nach einem der Ansprüche 1 bis 4, dadurch gekennzeichnet, daß die Anschlußplatte (3) zu der Längserstreckung des Grundelementes (1) rechtwinklig oder schräg mit einem Winkel von vorzugsweise 45° oder 60° angeordnet ist.

6. Bausatz nach einem der Ansprüche 1 bis 5, dadurch gekennzeichnet, daß als Zusatzelement ein im wesentlichen durch einen T-Träger oder einen Doppel-T-Träger gebildetes Verlängerungsteil (2) mit einem dem Grundelement (1) entsprechenden Querschnitt vorgesehen ist.

7. Bausatz nach einem der Ansprüche 1 bis 6, dadurch gekennzeichnet, daß als Zusatzelement eine Stützkonsole (13) mit einer im vorzugsweise Querschnitt T-förmigen oder U-förmigen Stütze (16) sowie an den Enden befindlichen Konsolenplatten (14, 15) vorgesehen sind und daß die Konsolenplatten (14, 15) vorzugsweise etwa rechtwinklig zueinander angeordnet sind.

8. Bausatz nach Anspruch 7, dadurch gekennzeichnet, daß die Stützkonsole (13) zumindest eine Konsolenplatte (14) aufweist, deren Breite und vorzugsweise auch die der Stütze (16) gleich oder kleiner als die lichte Weite zwischen gegenüberstehenden Flanschen oder Schenkeln des Grundelementes (1) oder eines Verlängerungsteiles (2) ist.

9. Bausatz nach einem der Ansprüche 1 bis 8, dadurch gekennzeichnet, daß Grundelemente (1) und Verlängerungsteile (2) mit unterschiedlicher Länge vorgesehen sind.

10. Bausatz nach einem der Ansprüche 1 bis 9, dadurch gekennzeichnet, daß insbesondere zum Verbinden von Grundelementen (1) und Verlängerungsteilen (2) wenigstens ein im Querschnitt U-förmiges Verbindungsstück (7) vorgesehen ist, dessen Außenquerschnitt etwa dem lichten Aufnahmequerschnitt eines Grundelementes (1) oder eines Verlängerungsteiles (2) seitlich neben dem Steg (5) entspricht.

11. Bausatz nach einem der Ansprüche 1 bis 10, dadurch gekennzeichnet, daß insbesondere zum Anschließen am freien Ende eines Grundelementes (1) oder an einem der Enden eines Verlängerungsteiles (2), ein Stirnadapter (17) mit einer Anschlußplatte (3) sowie einem damit verbundenen Verbindungsstück (18) mit Befestigungsstellen zum Anbringen an dem Grundelement (1) oder einem Verlängerungsteil (2) vorgesehen ist.

12. Bausatz nach Anspruch 11, dadurch gekennzeichnet, daß der Stirnadapter (17) zwei im Querschnitt U-förmige Verbindungsstücke (18) aufweist, die auf der Anschlußplatte (3) mit ihren Verbindungsstegen um die Stegdicke des Grundelementes (1) beziehungsweise des Verlängerungsteiles (2) etwa parallel beabstandet zueinander und vorzugsweise rechtwinklig zu der Anschlußplatte (3) angeordnet sind.

13. Bausatz nach einem der Ansprüche 1 bis 12, dadurch gekennzeichnet, daß einwinkelförmiger Formverbinder (11) vorgesehen ist, der zumindest an einem seiner Schenkel Löcher (12) zum Verbinden vorzugsweise mit dem Steg (5) eines Grundelementes (1) oder eines Verlängerungsteiles (2) aufweist.
